# EUROPÄISCHE PATENTSCHRIFT

(11) **EP 2 497 748 B1**
(45) Veröffentlichungstag und Bekanntmachung des Hinweises auf die Patenterteilung: **17.05.2017**
(21) Anmeldenummer: 12157082.4
(22) Anmeldetag: 27.02.2012
(51) Int. Cl.: B01D 39/06, C02F 3/10, C02F 103/42, C01B 39/02

(54) **Verfahren zur Behandlung von natürlichen Zeolithen**
Method for treating natural zeolites
Procédé de traitement de zéolithes naturels

(30) Priorität: 08.03.2011 AT 3102011
(43) Veröffentlichungstag der Anmeldung: 12.09.2012
(73) Patentinhaber: Wesner, Wolfgang, 1020 Wien (AT); Kurzmann, Heimo, 5302 Henndorf (AT)
(72) Erfinder: Wesner, Wolfgang, 1020 Wien (AT); Kurzmann, Heimo, 5302 Henndorf (AT)
(74) Vertreter: Vinazzer, Edith

(56) Entgegenhaltungen:
- WO-A1-02/062710
- WO-A1-2007/020588
- DE-A1- 19 807 406
- US-A- 4 510 254
- DATABASE WPI Week 199147 Thomson Scientific, London, GB; AN 1991-343621 XP002678845, & JP 3 229690 A (NISHI NIPPON SANGYO) 11. Oktober 1991 (1991-10-11)
- DATABASE WPI Week 199532 Thomson Scientific, London, GB; AN 1995-242903 XP002678846, & JP 7 148487 A (NISHI NIHON SANGYO KK) 13. Juni 1995 (1995-06-13)

## Beschreibung

Die Erfindung betrifft ein Verfahren zur Behandlung von natürlichen Zeolithen, welche als Filtermaterial, insbesondere zum Aufbau eines Biofilms zur Aufbereitung von Badewasser, vorzugsweise aus Schwimmteichen und Naturpools, verwendet werden, *wobei die Zeolithe in wässriger Säurelösung, welche Phosphate und Karbonate in Lösung bringt, gewaschen bzw. gebadet werden.*

Es ist bekannt, Naturzeolithe als Filtermaterial zur Wasseraufbereitung zu verwenden. Körnig gebrochene, von Wasser angeströmte Zeolithe sind ein gut geeignetes Substrat zur Anzucht von Biofilm, da Zeolithe eine große Oberfläche zur Verfügung stellen. Darüber hinaus sind Zeolithe durch negative Oberflächenladungen in der Lage, als Ionenaustauscher zu fungieren. Naturzeolithe können Nährstoffkationen, wie Ammonium, Kalium- und Magnesiumkationen anreichern und zwischenspeichern, sodass eine besonders gute lokale Versorgung des gebildeten Biofilms möglich ist.

Bei den üblicherweise als Filtersubstrat eingesetzten Zeolithen handelt es sich um Naturzeolithe mit einem hohen Klinoptinolithanteil. Die Entstehung dieser Zeolithvorkommen ist auf die Verwitterung von vulkanischen Aschen und Tuffen oder basaltischen Gesteinen zurückzuführen. Diese können terrestrisch oder marin abgelagert sein. Viele Lagerstätten sind auch auf metamorphe Sedimente zurück zu führen.

Naturzeolithe bestehen insbesondere aus Aluminiumsilikaten und enthalten in Abhängigkeit von der Lagerstätte und deren Entstehung auch andere Komponenten, beispielsweise Phosphate. Da es ein Ziel der biologischen Aufbereitung von Badewasser aus Schwimmbecken und Naturbecken (Biotopen) ist, Phosphate zu entfernen, ist phosphathaltiger Zeolith kaum als Filtersubstrat geeignet, je nach Phosphatgehalt sogar nicht brauchbar.

Ein Verfahren zur biologischen Wasserreinigung unter Verwendung von Naturzeolithen ist beispielsweise in der DE 102008022388 A1 beschrieben. Weitere Anwendungen von Naturzeolithen als Filtersubstrat sind aus der DE 4226660 A1, der EP 1590301 A1 und der AT 502 117 A1 bekannt. Darüber hinaus ist es bekannt, synthetisch hergestellte Zeolithe als Filtermaterial zu verwenden. Synthetisch hergestellte Zeolithe haben den Vorteil, phosphatfrei zu sein, die aufwendige Herstellung verursacht jedoch hohe Kosten.

*Aus der* JP 7148487 A *und der* JP 3229690 A *ist die Verwendung von Zeolithen als Ionentauscher zur Wasserenthärtung bekannt, wobei die Zeolithe in einem Salzsäurebad behandelt werden. Die* US 4,510,254 A *befasst sich mit der Entfernung von färbenden, organischen und anorganischen Substanzen aus natürlichen Zeolithen. Es wird ein Zeolithpulver erzeugt, welches als Pigmentmaterial oder als Füllmaterial verwendet werden soll. Das Zeolithpulver wird in Salzsäure gewaschen, um Sulfate zu entfernen.*

Ziel der gegenständlichen Erfindung ist es ein Verfahren zur Behandlung von Naturzeolithen zur Verfügung zu stellen, welches den Phosphatgehalt deutlich vermindert und welches eine wirtschaftliche Alternative zu synthetisch hergestellten Zeolithen darstellt.

Gelöst wird die gestellte Aufgabe erfindungsgemäß dadurch, dass *die Zeolithe* in einer wässrigen 1molaren Salzsäurelösung so *lange gewaschen bzw. gebadet werden bis ihr Phosphatgehalt höchstens 1 mg pro Kilogramm Zeolith beträgt.*
Durch die Behandlung der Zeolithe mit verdünnter Säure werden einerseits Phosphate in Lösung gebracht, andererseits wird CO₂ aus Karbonaten (Kalziumkarbonat, Magnesiumkarbonat) freigesetzt. Bei bevorzugten Ausführungen der Erfindung werden anschließend die von der Säure entfernten, aber für die biologische Aufbereitung zweckmäßigen Ionen, wie Kalzium, Magnesium, Kalium und Ammonium, wieder aufgebracht. Ziel der Behandlung ist es, den Phosphatgehalt soweit abzusenken, dass die Naturzeolithe als Filtersubstrat zur biologischen Aufbereitung von Wasser aus Schwimmteichen, Naturpools, Schwimmbecken und dergleichen besonders gut geeignet sind.

Für das erfindungsgemäße Verfahren ist es besonders effektiv, wenn die Zeolithe in verdünnter Salzsäure, in 1molarer Salzsäure, gewaschen bzw. gebadet werden.

In einem weiteren optionalen Verfahrensschritt werden die Zeolithe in einer wässrigen Lösung eines Aluminiumsalzes, insbesondere einer Aluminiumchloridlösung einer Konzentration von vorzugsweise 460 g pro Liter, behandelt, um derart die in den Zeolithen verbliebenen und oberflächlich gebundenen Phosphate in Aluminiumphosphate umzuwandeln.

In einem weiteren Verfahrensschritt werden die Zeolithe mit Kalkmilch gewaschen bzw. in Kalkmilch gebadet. Durch die Behandlung mit Kalkmilch werden die aus dem bzw. den vorherigen Behandlungsschritt(en) in den Zeolithen verbliebenen Säurereste neutralisiert. Dabei erfolgt eine Ablagerung der suspendierten Teilchen der Kalkmilch in Kapillaren der Zeolithe, wodurch eine höhere Pufferkapazität der Zeolithe bei deren Verwendung als Filtermaterial erreicht wird.

Um die für eine biologische Aufbereitung von Wasser möglichst optimalen Verhältnisse von Nährstoffionen zur Verfügung zu stellen, können in einem weiteren Verfahrensschritt die Zeolithe mit zumindest einer Nährstofflösung behandelt werden, welche zumindest eines der Kationen Ammonium, Kalium und Magnesium enthält. Dieser Verfahrensschritt kann jedoch auch entfallen, insbesondere dann, wenn die gewünschten Nährstoffionen aus dem zu behandelnden Wasser aufgenommen werden können.

Die Biofilmbildung auf den Zeolithen kann durch ein Aufbringen von biofilmbildenden Mikroorganismen bzw. deren Keimen unterstützt werden. Dazu können die Zeolithe mit zumindest einer Suspension von Mikroorganismen und/oder deren Keimen versetzt bzw. gewaschen werden. Alternativ zu dieser Maßnahme kann eine Behandlung der Zeolithe mit Wasser aus Teichen, Flüssen oder Seen erfolgen.

Ein weiterer optionaler Verfahrensschritt ermöglicht es, die Pufferkapazität der Zeolithe stark zu erhöhen. Dazu wird den Zeolithen Kalzium- und/oder Magnesiumcarbonat entweder in Pulver- oder Partikelform der Reinsubstanzen zugemischt oder es wird den Zeolithen ein Pulver bzw. Bruch aus phosphorarmen, karbonatischen Mineralien, wie Kalkstein, Marmor oder Dolomit, zugemischt.

Die Erfindung wird anhand der ausführlichen Beschreibung näher erläutert.

Das erfindungsgemäße Verfahren gestattet es, Naturzeolithe derart zu modifizieren bzw. zu behandeln, dass sie als Filtermedium bzw. als Trägermaterial für den Aufbau von Biofilm zur Aufbereitung von Badewasser besonders gut einsetzbar sind.

Das Verfahren gemäß der Erfindung umfasst zumindest einen Verfahrensschritt, welcher als erster Verfahrensschritt bezeichnet wird. Ein oder mehrere Verfahrensschritte können nachfolgend durchgeführt werden, die in der Beschreibung als "zweiter" bis "sechster" Verfahrensschritt bezeichnet sind, aber nicht in der Reihenfolge ihrer Bezeichnung durchgeführt werden müssen. Je nach Ausgangsmaterial und Verwendungszweck der Zeolithe kann lediglich einer oder es können beliebig viele der weiteren Verfahrensschritte durchgeführt werden.

Ausgangsmaterial für das erfindungsgemäße Verfahren ist Naturzeolith-Gesteinsbruch in definierten Korngrößen, beispielsweise von 2mm bis 4mm oder von 4mm bis 8mm oder von 8mm bis 16mm. Ein wesentliches Auswahlkriterium ist der Gesamtphosphorgehalt der Naturzeolithe, welcher maximal 50 mg Phosphor pro Kilogramm Zeolith betragen sollte. Durch das erfindungsgemäße Verfahren soll der Phosphorgehalt auf höchstens 1 mg pro Kilogramm gesenkt werden.

Gemäß der Erfindung werden die Naturzeolithe im ersten Schritt mit verdünnter Säure behandelt. In Frage kommen Säuren, welche in der Lage sind, Phosphate in Lösung zu bringen, insbesondere Salzsäure, vorzugsweise 1molare Salzsäure, aber auch Essigsäure, Ameisensäure oder Schwefelsäure. Die Naturzeolithe werden in einem Bad aus in Wasser verdünnter Säure behandelt, welches die Phosphate in Lösung bringt und CO₂ aus in den Zeolithen vorhandenen Karbonaten (Kalziumkarbonat, Magnesiumkarbonat) freisetzt. Ein Teil des in den Naturzeolithen enthaltenen Phosphates liegt als Apatit (Kalziumphosphat) vor, welches in den Kalziumkarbonat-Einschlüssen lokalisiert ist. Um die Phosphate zu entfernen, ist es daher erforderlich, die Karbonate aus den Poren der silikatischen Gesteinsteile zu lösen. Je nach Struktur und Kalkgehalt des Ausgangsgesteins beträgt die Behandlungsdauer im Säurebad zwischen wenigen Stunden und mehreren Monaten. Dabei ist während des gesamten Prozesses darauf zu achten, dass immer Säure verfügbar ist, damit die Reaktion nicht zum Stehen kommt. Der Umsatz bzw. die Behandlungsdauer kann durch eine Anzahl von Maßnahmen erhöht werden. So ist es beispielsweise möglich, die Zeolithe in einer Trommel oder in einem Mischer mechanisch zu bewegen. Alternativ dazu kann die Säurelösung durch Pumpen umgewälzt werden oder erwärmt werden, es kann ferner die Säurekonzentration erhöht werden oder es wird die Säurelösung nach einiger Zeit zumindest zum Teil durch frische Säurelösung ausgetauscht. Durch die Feststellung des Gehalts an Phosphat in den Zeolithen wird überprüft, ob das gesetzte Ziel - Absenkung des Phosphatgehalts unter 1 mg pro Kilogramm - erreicht ist. Nach der Säurebehandlung werden die Zeolithe in sauberen Wasser sorgfältig gewaschen.

In einem zweiten, optionalen Verfahrensschritt werden die in den Zeolithen verbliebenen und oberflächlich gebundenen Phosphate in Aluminiumphosphate umgewandelt. Die an Aluminium gebundenen Phosphate sind nicht säurelöslich und für den Aufbau von Biofilm daher nicht nutzbar. Gleichzeitig können Kapillaren, welche noch Karbonatreste enthalten, durch die Einlagerung von Aluminiumhydroxid, welches sich beim Trocknen oder bei pH-Erhöhung in Aluminiumoxid umwandelt, zumindest teilweise versiegelt werden. In diesem Verfahrensschritt werden die gemäß dem ersten Schritt behandelten und anschließend gewaschenen Zeolithe mit einer wässrigen Lösung eines Aluminiumsalzes behandelt.

Insbesondere wird eine Aluminiumchloridlösung einer Konzentration von vorzugsweise 450 g/l verwendet. Die Lösung wird insbesondere auf die Zeolithe gesprüht oder auf die in einen Mischer eingebrachten Zeolithe aufgebracht. Diese Reaktion ist in wenigen Stunden abgeschlossen, überschüssiges Aluminiumsalz kann auf dem Zeolith verbleiben bzw. wird in einem dritten Behandlungsschritt, wie nachfolgend beschrieben, sehr schnell mit Kalkmilch über Aluminiumhydroxid in Aluminiumoxid umgewandelt.

Die gemäß dem ersten und gegebenenfalls auch gemäß dem zweiten Verfahrensschritt behandelten Zeolithe können in einem weiteren, dritten Schritt mit Kalkmilch behandelt werden. Kalkmilch ist eine Aufschlämmung von Kalziumhydroxid in Wasser und daher eine Suspension von gelöschtem Kalk. Durch die Behandlung mit Kalkmilch werden die nach dem ersten bzw. dem ersten und dem zweiten Behandlungsschritt verbliebenen Säurereste neutralisiert. Durch die Säurebehandlung im ersten Verfahrensschritt sind die in den Zeolithen enthaltenen Kationen, wie Ammonium-, Kalium-, Magnesiumionen durch Protonen ersetzt worden. Durch die Behandlung mit Kalkmilch werden diese mit Protonen besetzten Stellen zum überwiegenden Teil mit Kalzium gesättigt. Durch die Ablagerung der suspendierten Teilchen der Kalkmilch in Kapillaren der Zeolithe wird eine höhere Pufferkapazität der Zeolithe bei deren Verwendung als Filtermaterial erreicht.

Soll nur der Phosphatgehalt der Zeolithe reduziert werden und keine Erhöhung der Pufferkapazität erforderlich oder gewünscht sein, so kann der dritte Schritt entfallen. Bei der Verwendung von gemäß dem ersten Verfahrensschritt oder von gemäß dem ersten und dem zweiten Verfahrensschritt behandelten Zeolithen als Trägermaterial zur Biofilmbildung erfolgt durch die Ablagerung von Kalk aus dem aufzubereitenden Wasser ebenfalls eine Neutralisation, jedoch etwas langsamer als es bei einer Behandlung gemäß dem dritten Verfahrensschritt der Fall ist und es ist die Pufferkapazität der Zeolithe schlechter - der Anwuchs des Biofilms kann durch die Endprodukthemmung der Kohlensäure aus der Atmung des Biofilms etwas verlangsamt sein, da keine schnelle Umwandlung in Kalziumhydrogenkarbonat aus Kalziumkarbonat erfolgen kann. Eine geringe Pufferkapazität des Filtermediums kann insbesondere in Fischteichen (Koiteichen) interessant sein, wenn gleichzeitig eine Salzsäuredosierung zur pH Wert- Absenkung eingesetzt werden soll (eine hohe Pufferkapazität bedeutet hier einen hohen Säurebedarf). Auch für Gartenteiche, welche saure Gewässer darstellen sollen (Moorseen etc.) sind Filtersubstrate ohne Karbonate von Interesse.

In einem vierten optionalen Verfahrensschritt können auf die behandelten Zeolithe Nährstoffionen aufgebracht werden, um derart möglichst optimale Verhältnisse der einzelnen Nährstoffionen zueinander zu schaffen. Das Aufbringen erfolgt durch ein Behandeln der Zeolithe mit entsprechenden Lösungen der Nährsalze (Aufsprühen oder in einem Bad überstauen). Dieser Verfahrensschritt kann auch entfallen, wenn die gewünschten Nährstoffionen aus dem zu behandelnden Wasser aufgenommen werden können. Dieser Vorgang kann durch entsprechende Düngergaben in das aufzubereitende Wasser beschleunigt werden.

In einem weiteren, fünften und ebenfalls optionalen Verfahrensschritt kann eine Belebung der Zeolithe durch das Aufbringen von Biofilm bildenden Mikroorganismen bzw. von deren Keimen durchgeführt werden. Dazu können Suspensionen von angezüchteten Kulturen, beispielsweise durch Aufsprühen, aufgebracht werden. Alternativ dazu kann eine Behandlung mit Wasser aus Teichen, Flüssen und Seen erfolgen. Dieses Wasser wird in einen Mischer oder in einen stehenden Behälter eingebracht, in welchem die Zeolithe enthalten sind. Alternativ kann dieses Wasser durch eine Schüttung der Zeolithe durchgepumpt werden. Durch diese Maßnahmen wird die Bildung eines Biofilms am Zeolith-Filtermaterials beschleunigt.

Ein sechster optionaler Verfahrensschritt ermöglicht es, die Pufferkapazität der Zeolithe stark zu erhöhen. Dazu werden den Zeolithen Erdalkalikarbonate (Kalziumkarbonat und/oder Magensiumkarbonat) als Pulver, Bruch oder in Rundkornform, entweder in einheitlichen oder unterschiedlichen Korngrößen, zugemischt. Vorzugsweise erfolgt eine Zumischung von phosphatarmen Bruch aus Dolomit, Kalk oder Marmor. Die entstehende Mischung soll möglichst homogen sein, es ist daher von Vorteil, das Abmischen in einer Mischtrommel vorzunehmen.

Es ist ferner möglich, Kombinationen der beschriebenen Schritte gleichzeitig auszuführen, insbesondere können der erste und der zweite, der dritte und der vierte, der vierte und der fünfte, der dritte bis fünfte sowie der dritte und der fünfte Verfahrensschritt gleichzeitig ausgeführt werden.

## Patentansprüche

1. Verfahren zur Behandlung von natürlichen Zeolithen, welche als Filtermaterial, insbesondere zum Aufbau eines Biofilms zur Aufbereitung von Badewasser, vorzugsweise aus Schwimmteichen und Naturpools, verwendet werden, *wobei die Zeolithe in wässriger Säurelösung, welche Phosphate und Karbonate in Lösung bringt, gewaschen bzw. gebadet werden,*
**dadurch gekennzeichnet,**
***dass*** *die Zeolithe so lange gewaschen bzw. gebadet werden bis ihr Phosphatgehalt höchstens 1 mg pro Kilogramm Zeolith* beträgt und dass die wässrige Säurelösung eine 1molare Salzsäurelösung ist.

2. Verfahren nach Anspruch 1, **dadurch gekennzeichnet, dass** die Zeolithe in einer wässrigen Lösung eines Aluminiumsalzes, insbesondere Aluminiumchloridlösung einer Konzentration von vorzugsweise 450 g/l, behandelt werden.

3. Verfahren nach einem der Ansprüche 1 bis 2, **dadurch gekennzeichnet, dass** die Zeolithe mit Kalkmilch gewaschen bzw. in Kalkmilch gebadet werden.

4. Verfahren nach einem der Ansprüche 1 bis 3, **dadurch gekennzeichnet, dass** die Zeolithe mit zumindest einer Nährstofflösung behandelt werden, welche zumindest eines der Kationen Ammonium, Kalium und Magnesium enthält.

5. Verfahren nach einem der Ansprüche 1 bis 4, **dadurch gekennzeichnet, dass** die Zeolithe mit zumindest einer Suspension von Mikroorganismen und/oder deren Keimen, welche die Biofilmbildung fördern, versetzt bzw. gewaschen werden.

6. Verfahren nach Anspruch 5, **dadurch gekennzeichnet, dass** die Zeolithe mit Wasser aus Teichen, Flüssen, Seen und dergleichen versetzt bzw. gewaschen werden.

7. Verfahren nach einem der Ansprüche 1 bis 6, **dadurch gekennzeichnet, dass** die Zeolithe mit Kalzium- und/oder Magnesiumkarbonat vermischt werden.

8. Verfahren nach Anspruch 7, **dadurch gekennzeichnet, dass** das Kalzium- und/oder Magnesiumkarbonat in Pulver- oder Partikelform der Reinsubstanzen zugemischt wird.

9. Verfahren nach Anspruch 8, **dadurch gekennzeichnet, dass** den Zeolithen Pulver oder Bruch aus phosphorarmen karbonatischen Mineralien, wie Kalkstein, Marmor oder Dolomit, zugemischt wird.

## Claims

1. Method for treating natural zeolites, which will be used as filter material, in particular for constructing a bio film for preparing bath water, preferably from swimming ponds and natural ponds, wherein the zeolites are washed or bathed in aqueous acid solution, which rehydrates phosphates and carbonates, **characterised in that**
the zeolites are washed or bathed until their phosphate content is no more than 1 mg per kilogram of zeolites and until the aqueous acid solution is a 1-molar hydrochloric acid solution.

2. Method according to claim 1, **characterised in that** the zeolites are treated in an aqueous solution of an aluminium salt, in particular an aluminium chloride solution with a concentration of preferably 450 g/l.

3. Method according to one of the claims 1 to 2, **characterised in that** the zeolites are washed with milk of lime or bathed in milk of lime.

4. Method according to one of the claims 1 to 3, **characterised in that** the zeolites are treated with at least one nutrient solution, which contains at least one of the cations ammonia, potassium and magnesium.

5. Method according to one of the claims 1 to 4, **characterised in that** the zeolites are mixed or washed with at least one suspension of microorganisms and/or their nucleus, which support bio film formation.

6. Method according to claim 5, **characterised in that** the zeolites are mixed or washed with water from ponds, rivers, lakes and suchlike.

7. Method according to one of the claims 1 to 6, **characterised in that** the zeolites are mixed with calcium and/or magnesium carbonate.

8. Method according to claim 7, **characterised in that** the calcium and/or magnesium carbonate is admixed with the pure substances in powder or particle form.

9. Method according to claim 8, **characterised in that** the zeolites are admixed with powder or cullet of low-phosphorous carbonatic minerals such as limestone, marble or dolomite.

## Revendications

1. Procédé pour traiter des zéolites naturelles utilisées en tant que matériel de filtre, notamment pour la formation d'un biofilm pour le traitement de l'eau du bain, provenant de préférence d'étangs de baignade et de piscines naturelles, les zéolites étant lavées ou baignées dans une solution acide aqueuse qui dissout des phosphates et carbonates,
**caractérisé en ce que**
les zéolites sont lavées ou baignées jusqu'à ce que leur teneur en phosphate soit d'au moins 1 mg par kilogramme de zéolite et que la solution acide aqueuse est une solution d'acide chlorhydrique à 1 molaire.

2. Procédé selon la revendication 1, **caractérisé en ce que** les zéolites sont traitées dans une solution aqueuse d'un sel d'aluminium, notamment dans une solution de chlorure d'aluminium d'une concentration de préférence de 450 g/l.

3. Procédé selon l'une quelconque des revendications 1 à 2, **caractérisé en ce que** les zéolites sont lavées avec du lait de chaux ou baignées dans du lait de chaux.

4. Procédé selon l'une quelconque des revendications 1 à 3, **caractérisé en ce que** les zéolites sont traitées avec au moins une solution nutritive comportant au moins l'un des cations aluminium, potassium et magnésium.

5. Procédé selon l'une quelconque des revendications 1 à 4, **caractérisé en ce que** les zéolites sont mélangées ou lavées avec au moins une suspension de microorganismes et/ou leurs germes favorisant la formation du biofilm.

6. Procédé selon la revendication 5,
**caractérisé en ce que** les zéolites sont mélangées
ou lavées avec de l'eau provenant d'étangs, fleuves, lacs etc.

7. Procédé selon l'une quelconque des revendications 1 à 6, **caractérisé en ce que** les zéolites sont mélangées avec du carbonate de calcium et/ou de magnésium.

8. Procédé selon la revendication 7,
**caractérisé en ce que** le carbonate de calcium et/ou de magnésium est ajouté sous forme de poudre ou de particules des substances pures.

9. Procédé selon la revendication 8, **caractérisé en ce qu'**une poudre ou des grumeaux de minéraux carbonatés pauvres en phosphore, tels que le calcaire, le marbre ou la dolomite, est/sont mélangée/mélangés aux zéolites.
